# EUROPEAN PATENT APPLICATION

(11) **EP 2 541 704 A1**
(43) Date of publication of application: **02.01.2013**
(21) Application number: 11005289.1
(22) Date of filing: 29.06.2011
(51) Int. Cl.: H02B 11/28

(54) **Medium or high voltage switchgear assembly**

(71) Applicant: ABB Technology AG, 8050 Zürich (CH)
(72) Inventor: Vrbka, Pavel, 59262 Nedvedice (CZ); Michlicek, Emil, 61300 Brno (CZ)
(74) Representative: Kania, Frantisek

(57) **Abstract**

A medium or high voltage switchgear assembly for making and breaking a connection between a first current inlet / outlet means (1) and a second current inlet / outlet means (2), the assembly comprising:
- a first current inlet / outlet means (1) having a contact end,
- a second current inlet / outlet means (2) spaced apart from the first current inlet / inlet outlet means (1) and having a contact end,
- at least one earthing contact (4), and
- at least one current breaking device (3) comprising a first connector (5) having a longitudinal axis Y and facing the contact end of the second current inlet / outlet means (1) and a second connector (6) arranged substantially in parallel to the first connector (5), wherein the current breaking device is movable relative to the current inlet / outlet means (1, 2) along the longitudinal axis Y of the first connector (5).. The second connector (6) of the current breaking device (3) is at least partially rotatable around the longitudinal axis Y of the first connector (5) for placing the second connector (6) to face either the contact end of the first current inlet / outlet means or the earthing contact (4), while the first connector (5) faces the contact end of the second current inlet / outlet means (2). A receptacle for arranging contact ends of current inlet/outlet means (1, 2) in such a medium or high voltage switch gear is described as well.

## Description

The invention relates to a medium or high voltage switchgear assembly for making and breaking a connection between a first current inlet / outlet means and a second current inlet / outlet means and / or at least one earthing contact, the assembly comprising at least one current breaking device movable relative to the current inlet / outlet means. The invention relates as well to a receptacle for arranging contact ends of current inlet/outlet means in such a switchgear.

### Prior art

Medium or high voltage switchgear apparatuses are used in electric power systems to make and break connection between two current inlet / outlet systems and to earth any or both of the two current inlet / outlet systems as necessary. In this specification, the term "earth" or "earthing contact" stands for a point having substantially the same or almost the same electrical potential as that of earth or ground. Known switchgear assemblies comprise two current inlet / outlet systems arranged spaced apart, as well as at least one current breaking device, at least one earthing contact and at least one individual earthing device for connecting a part of the switchgear assembly to the earthing contact. In some cases a combination of disconnector (two or three-positions) and current breaking device can be used for this purpose. The main drawback of the known switchgear assemblies is their complicated structure and production.

### Summary of the invention

The main object of the invention is to provide a switchgear assembly having a simpler and more integral structure. The object is achieved by the invention as described in claim 1. The claimed switchgear comprises a first current inlet / outlet means having a contact end,
- a second current inlet / outlet means having a contact end and being arranged spaced apart from the first current inlet / inlet outlet means,
- at least one earthing contact, and
at least one current breaking device comprising a first connector having longitudinal axis Y and facing the contact end of the second current inlet / outlet means and a second connector arranged substantially in parallel to the first connector. The current breaking device is movable relative to the current inlet / outlet means along the longitudinal axis Y , while the second connector of the current breaking device is at least partially rotatable around the longitudinal axis Y of the first connector for placing the second connector to face either the contact end of the first current inlet / outlet means or the earthing contact, while the first connector faces the contact end of the second current inlet / outlet means.

The object is achieved also by the invention as described in the related appended claims which define a receptacle for arranging contact ends of current inlet / outlet means in a medium or high voltage switchgear according to the invention wherein the receptacle comprises at least one pair of a first and a second compartment and at least one third compartment, wherein the compartments are separated from each other by their side walls of an electrically insulating material. Said compartments are adapted such that the contact ends of the current inlet / outlet means and the earthing contact arranged using the receptacle are positioned to allow the function of the above switchgear, which comprises a current breaking device having a second connector rotatable around a longitudinal axis of a first connector.

Preferred exemplary embodiments of the invention are described in connection with the drawings and defined in the dependant claims.

Current breaking devices are used in making and/or breaking connection between two medium or high voltage electrical systems to avoid an arc formation between the two systems when the connectors of the systems are close to each other.

The term medium or high voltage electrical systems has to be understood as electrical systems with rated voltages above 1kV.

The term current breaking device as used herein shall include current breaking devices, contactors, switch disconnectors, disconnectors using different interrupting principles, such as current breaking devices with vacuum interrupters, air blast breaking devices, breaking devices filled with gases and any other suitable current breaking devices based on known switching technologies.

In the exemplary embodiments herein disclosed, the breaking device is represented schematically as a withdrawable medium voltage vacuum circuit breaker; such type of circuit breaker may be any available on the market and suitable for such applications, therefore it will not be described in details hereinafter.

### Brief description of the drawings

The invention will be described in more detail with respect to the drawings in which:
Fig. 1 to 4 show schematic side views of an exemplifying embodiment of the assembly illustrating the successive steps of operation of the embodiment;
Figs. 5 and 6 schematically show two possible arrangements of the current inlet / outlet means and of the earthing contacts;
Fig. 7 shows a schematic front view of an exemplifying embodiment of the receptacle according to the invention;
Fig. 8 is a sectional view A-A from Fig. 7;
Fig. 9 shows the receptacle of Fig. 7 wherein the contact ends have been incorporated; and
Fig. 10 is a sectional view A-A from Fig. 9.

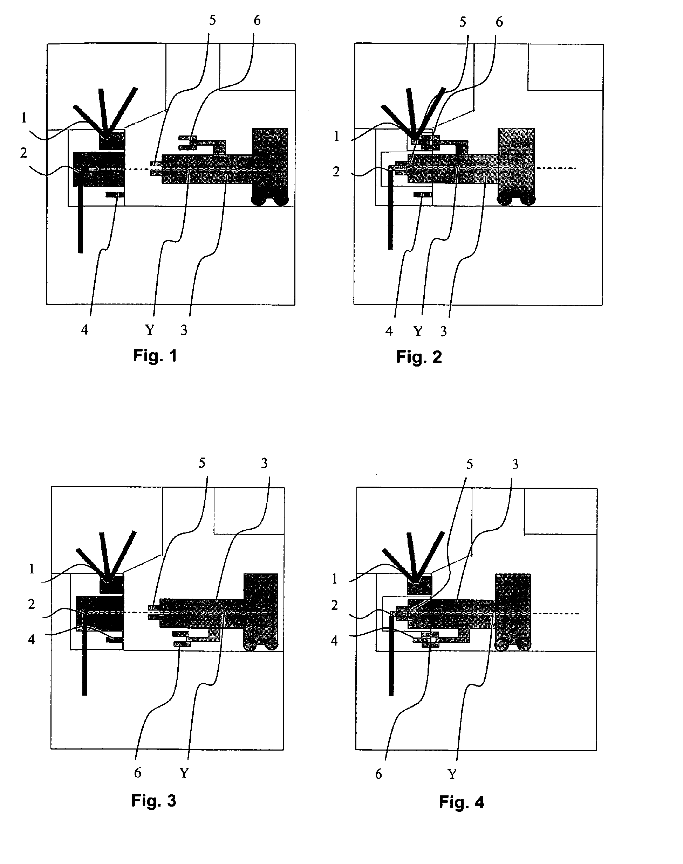

As shown in Figs. 1 to 4, an exemplary embodiment of the switchgear assembly according to the invention comprises a first current inlet / outlet means 1, e.g. a busbar with tee-offs, and a second current inlet / outlet means 2, e.g. a cable, arranged for instance one above the other, a current breaking device 3 and an earthing contact 4. The current breaking device 3 comprises a first connector 5 which may be connected to the second current inlet / outlet means 2 and a second connector 6 which may be connected optionally to the first current inlet / outlet means 1 or to the earthing contact 4. The first connector 5 has a longitudinal axis Y. The current breaking device 3 is movable relative to the current inlet / outlet means 1, 2 in a direction substantially parallel to the longitudinal axis Y of the connector 5. This means that either the current breaking device 3 together with connectors 5, 6 is movable towards the current inlet / outlet means 1, 2 and therefrom or the current inlet / outlet means 1, 2 are movable towards the current breaking device 3 and therefrom.

Figs. 1 to 4 show an embodiment comprising a current breaking device 3 mounted on a truck which may be driven towards the current inlet / outlet means 1, 2 or therefrom to make or break a connection between the first current inlet / outlet means 1 and the second current inlet / outlet means 2 or the earthing contact 4. However other means may be used for effecting the relative movement of the current breaking device 3 and the current inlet / outlet means 1, 2. Fig. 1 shows the invention prepared for making a connection between the first and the second current inlet / outlet means 1, 2. The current breaking device 3 is switched off. By moving the current breaking device 3 towards the current inlet / outlet means 1, 2 the first connector 5 is attached to the contact end of the second current inlet / outlet means 2 and the second connector 6 is attached to the contact end of the first current inlet / outlet means 1, as shown in Fig. 2. Then the current breaking device 3 may be switched ON to realize an electrical connection between the two current inlet / outlet means 1, 2.

When repair or maintenance of the switchgear assembly is required, the current breaking device 3 is switched OFF and moved from the current inlet / outlet means 1, 2, as shown in Fig. 1. Then, the second connector 6 (together with the current breaking device 3 in this exemplary embodiment) is rotated around the longitudinal axis Y of the first connector 5 by 180° such that the second connector 6 faces the earthing contact 4. Subsequently, the current breaking device 3 is moved towards the second current inlet / outlet means 2 and the earthing contact 4, wherein the first connector 5 is attached to the contact end of the second current inlet / outlet means 2 and the second connector 6 is attached to the earthing contact 4. Then, the current breaking device is switched ON and thus the second current inlet / outlet means 2 is earthed safely. The earthing of the first current inlet/outlet means will be effected by a separate earthing device (not shown), e.g using the earthing truck disclosed in the European Patent Application No. 09466020.6, the disclosure of which is incorporated herein by reference. In any case, as a person skilled in the art would appreciate, any other suitable earthing device may be used.

In this particular embodiment shown in Figs. 1 to 4, the current breaking device 3 comprises a cylindrical housing having a longitudinal axis. The first connector 5 protrudes from a base of the cylindrical housing and the longitudinal axis Y of the first connector 5 is substantially identical with the longitudinal axis of the cylindrical housing. The second connector 6 is arranged on a cranked arm extending from the cylindrical housing.

Other embodiments of the invention may be advantageous as well. The current breaking device 3 as such does not need to be rotatably arranged. In that case the second connector 6 is movable in respect of the casing of the current breaking device 3 on at least a part of a circle, such that the rotational movement of the second connector 6 around the longitudinal axis of the first connector 5 may be effected without the need to rotate the whole current breaking device 3. It is also possible to make a part of a casing of the current breaking device rotatable with respect to the rest of the current breaking device and to attach the second connector 6 to said rotatable part of the casing.

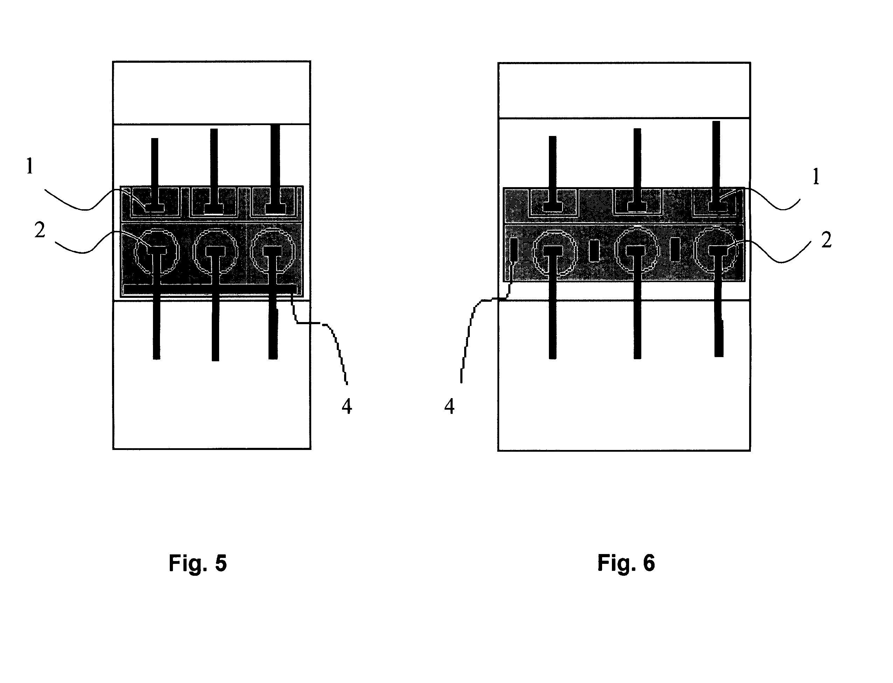

The rotation of the second connector 6 as shown in Figs. 1 to 5 is at an angle of 180°. However, other angles may be used as well, such as shown e.g. in Fig. 6, wherein the angle of rotation is 90°; and in same cases (not shown) other angles of rotation are possible. The angle of rotation shall correspond to the mutual position of the first current inlet / outlet means 1 and the earthing contact 4 with respect to the second current inlet / outlet means. Essentially, the rotation of the second connector 6 must be such that it allows optionally to place the second connector 6 to face the contact end of the first current inlet / outlet means 1 while the first connector 5 faces the contact end of the second current inlet / outlet means 2 or to place the second connector to face the earthing contact 4 while the first connector 5 again faces the contact end of the second current inlet / outlet means 2. Thus it is not necessary that the rotational movement actually takes place while the first connector faces the contact end of the second current inlet/outlet means.

As shown in Fig. 5, i.e. in the exemplary embodiment using a 180° angle, a set of first current inlet / outlet means 1 may be arranged side by side, a respective set of second current inlet / outlet means 2 being arranged below those and a common earthing contact 4 in the form of an earthing strip is arranged below the set of the second current inlet / outlet means 2.

It is also possible to provide separate earthing contacts 4 for each pair of first and second current inlet / outlet means 1, 2. In such a case, the earthing contacts 4 may be arranged again below the second current inlet / outlet means 2 or beside it, i.e. at a 90° angle with respect to a line connecting the respective pair of first and second current inlet / outlet means, as shown in Fig. 6, or at substantially any other angle suitable for application allowing drive functionality.

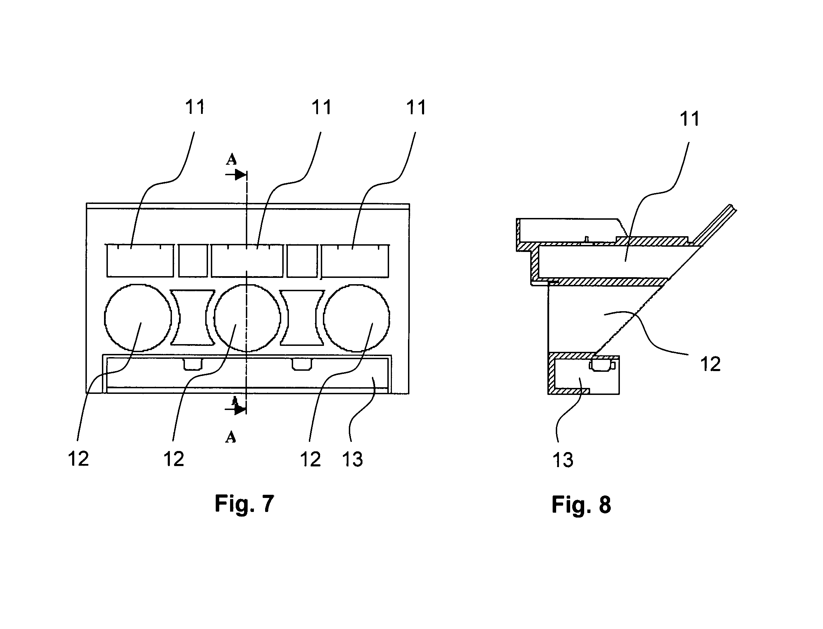

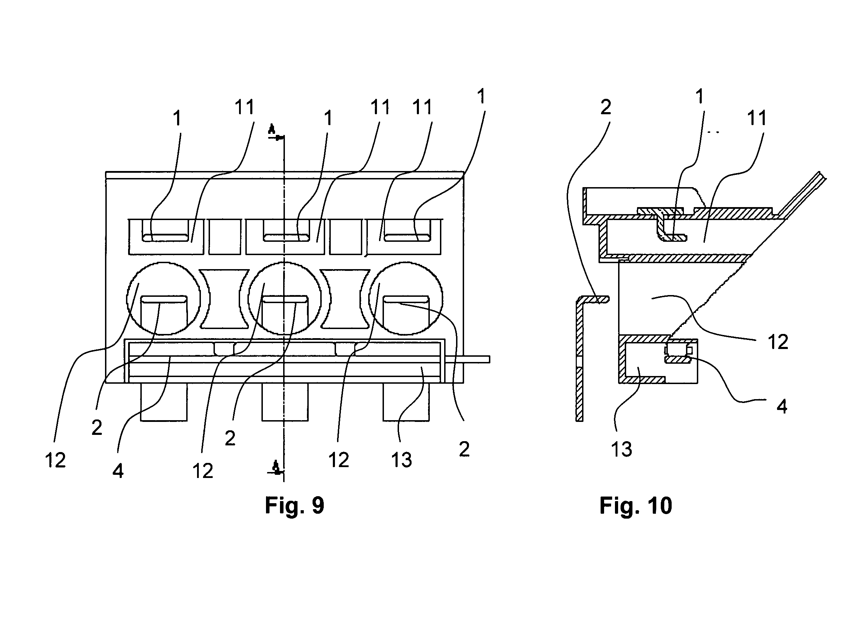

Thanks to the simple and integral form of the switchgear assembly according to the invention, the set of the first current inlet / outlet means 1, the second current inlet / outlet means and the earthing contact(s) may be arranged using an insulated, integrated receptacle (a monoblock), such that the production is more easy and the mounting time of the switchgear assembly is reduced significantly. An embodiment of the receptacle is shown in Figs. 7 through 10.

Such receptacle shall comprise at least one pair of a first and a second compartment 11, 12 and at least one third compartment 13, wherein the compartments are separated from each other by their side walls of an electrically insulating material and they allow to approach the contact ends of the first and second current inlet/outlet means 1, 2 and the earthing contact 4 from one side of the receptacle, when the receptacle is arranged inside the switchgear.

The receptacle shown in Fig. 7 through 10 has a monolithic structure and it comprises three pairs of a first compartment 11 and a second compartment 12, while there is one third compartment 13 for a shared earthing contact.

The second compartment 12 of each pair of compartments allows an approach to a contact end of a second current inlet / outlet means 2. The first compartment 11 of the pair of compartments is adapted to accommodate a contact end of a first current inlet / outlet means 1 such that the contact end is arranged tangentially to a circle around the longitudinal axis of the second compartment 12, the third compartment 13 being arranged for accommodating an earthing contact 4) tangentially to the same circle.

The contact ends shown in Figs. 7 through 10 have a flat structure. In case of a circular structure of contact ends the compartments will be adapted such that the contact end of the first current inlet / outlet means may be arranged on a circle line around the longitudinal axis of the second compartment, the third compartment being arranged for accommodating an earthing contact 4 on the same circle line. Those skilled in the art will find obvious alternative embodiments, such as e.g. a circular structure of the contact end of the second current inlet / outlet means 2 and a flat structure of the contact end of the first current inlet / outlet means and of the earthing contact (suitable especially for the embodiment of Fig. 6).

Said circular line does not need to be around the longitudinal axis of the second compartment, but it should be around a line which is at least parallel to the longitudinal axis of the second compartment and which is identical with the axis of contact of the contact end of the second current inlet / outlet means 2 when that contact end is arranged in the working position. In other words, when in operation the contact ends of the second current inlet / outlet means 2 do not have to be arranged such that the axis of the contact end is identical with the longitudinal axis of the second compartment 12.

The embodiment of the receptacle shown in Figs. 7 through 10 does not include attachment means for the contact ends of the second current inlet / outlet means 2. Said contact ends are arranged inside a housing of a switchgear using a separate insulated attachment means, while the receptacle is arranged inside the housing in a way allowing to approach the contact ends of the second current inlet / outlet means 2 via the second compartment 12. It is also possible to adapt the receptacle for accommodating the contact ends of the second current inlet / outlet means 2 inside the second compartment 12.

The switch gear assembly as well as the receptacle according to the invention are based on the following general inventive concept: The receptacle comprises compartments 11, 12, 13 adapted to comprise the contact ends of the first and second current inlet / outlet means 1, 2 and the earting contact 4, wherein the contact end of the first current inlet / outlet means 1 and said earthing contact 4 are arranged on a circle around the axis of connection of the contact end of the second current inlet / outlet means 2 in order to co-operate with the first connector 5 and the second connector 6 of the current breaking device 3, such that rotating the second connector 6 around the axis Y and moving the current breaking device 3 relative to the receptacle, the first connector 5 is connected with the contact end of the second current inlet / outlet means 2 and the second connector 6 is connected either with the contact end of the first current inlet outlet means 1 or with the earting contact 4.

The receptacle may be produced of any suitable electro-insulating material fulfilling required mechanical and electrical properties, such as e.g. an epoxy resin or a thermoplastic material. Integrated insulating barriers along with the circumferential walls of the receptacle form the compartments, while the barriers are intended to separate contact ends of the first current inlet / outlet means 1 and contact ends of the second current inlet / outlet means 2 and the earthing contact(s) 4 from each other.

Preferably, the switchgear assembly comprises a control unit (not shown) for controlling the movement of the current breaking device 3 and / or the current inlet / outlet means 1, 2 and the earthing contact(s) 4, and for controlling the rotation of the second connector 6 of the current breaking device 3. For safety reasons such control unit should prevent any movement of the current breaking device 3 and any rotation of its second connector 6 when the current breaking device 3 is switched ON.

## Claims

1. A medium or high voltage switchgear assembly for making and breaking a connection between a first current inlet / outlet means (1) and a second current inlet / outlet means (2), the assembly comprising:
- a first current inlet / outlet means (1), said first current inlet / outlet means (1) having a contact end;
- a second current inlet / outlet means (2) spaced apart from the first current inlet / inlet outlet means (1), said second current inlet / outlet means (2) having a contact end;
- at least one earthing contact (4), and
- at least one current breaking device (3) comprising a first connector (5) having a longitudinal axis Y and facing the contact end of the second current inlet / outlet means (2) and a second connector (6) arranged substantially in parallel to the first connector (5), wherein the current breaking device (3) is movable relative to the current inlet / outlet means (1, 2) along the longitudinal axis Y of the first connector (5)
**characterised in that**
the second connector (6) of the current breaking device (3) is at least partially rotatable around the longitudinal axis Y of the first connector (5) for placing the second connector (6) to face either the contact end of the first current inlet / outlet means (1) or the earthing contact (4), while the first connector (5) faces the contact end of the second current inlet / outlet means (2).

2. The switchgear assembly according to claim 1 wherein the current breaking device (3) comprises a cylindrical housing, the first connector (5) protruding from its base and the second connector (6) being arranged on an arm extending from the cylindrical wall of the housing.

3. The switchgear assembly according to claim 1 or 2, wherein the current breaking device (3) or at least parts thereof comprising the second connector (6) are rotatable around the longitudinal axis Y of the first connector (5).

4. The switchgear assembly according to any of claims 1 to 3, wherein it comprises a series of sets of a first current inlet / outlet means (1), a second current inlet / outlet means (2), a current breaking device (3) and an earthing contact (4).

5. The switchgear assembly according to any of claims 1 to 3, wherein it comprises an earthing contact (4) and a series of sets of a first current inlet / outlet means (1), a second current inlet / outlet means (2) and a current breaking device (3).

6. The switchgear assembly according to any of claims 1 to 5, wherein the second current inlet / outlet means (2) is arranged between the first current inlet / outlet means (1) and the earthing contact (4).

7. The switchgear assembly according to any of claims 1 to 6, further comprising safety means preventing any movement of the current breaking device (3) and / or any rotation of its second connector (6) when the current breaking device (3) is switched ON.

8. A receptacle for arranging contact ends of current inlet/outlet means (1, 2) in a medium or high voltage switch gear assembly according to any of claims 1 to 7 **characterised in that** it comprises at least one pair of a first and a second compartment (11, 12) and at least one third compartment (13), wherein the compartments are separated from each other by their side walls of an electrically insulating material,
the second compartment (12) of each pair of compartments being arranged for allowing an approach to a contact end of a second current inlet / outlet means (2), the first compartment (11) of the pair of compartments being arranged for accommodating a first current inlet / outlet means (1) with its contact end arranged tangentially to or on a circle around a line going through the second compartment (12) and parallel to or identical with the longitudinal axis of the second compartment (12), the third compartment (13) being arranged for accommodating an earthing contact (4) on the same circle or tangentially thereto.

9. The receptacle according to claim 8, wherein it is of a monolithic design.

10. The receptacle according to claim 8 or 9 wherein it comprises a series of the pairs of a first and a second compartment (11, 12) arranged side by side and one third compartment arranged for attaching one earthing contact (4) common for all pairs of the series.

11. The receptacle according to claim 8 or 9, wherein it comprises a series of sets of a first compartment (11), a second compartment (12) and a third compartment (13).
